# EUROPÄISCHE PATENTSCHRIFT

(11) **EP 2 817 539 B1**
(45) Veröffentlichungstag und Bekanntmachung des Hinweises auf die Patenterteilung: **13.04.2016**
(21) Anmeldenummer: 13704434.3
(22) Anmeldetag: 14.02.2013
(51) Int. Cl.: F16J 15/32

(54) **RADIALWELLENDICHTUNG**
RADIAL SHAFT SEAL
JOINT RADIAL D'ARBRE

(30) Priorität: 24.02.2012 DE 102012202862
(43) Veröffentlichungstag der Anmeldung: 31.12.2014
(73) Patentinhaber: VR Automotive Dichtungssysteme GmbH, 98673 Auengrund-Crock (DE)
(72) Erfinder: SCHAUB, Martin, 98646 Hildburghausen (DE); KREUTZER, Siegmar, verstorben (DE)
(74) Vertreter: Lippert, Stachow & Partner
(86) Internationale Anmeldenummer: PCT/EP2013/052997
(87) Internationale Veröffentlichungsnummer: WO 2013/124209

(56) Entgegenhaltungen:
- US-A1- 2010 244 389

## Beschreibung

Die Erfindung betrifft eine Radialwellendichtung zur Abdichtung einer Welle, die durch eine Gehäusewandöffnung hindurchgeführt ist, bestehend aus mindestens einem membranartigen, ringförmigen Dichtkörper mit einer dichtend an die Welle anlegbaren Dichtlippe, einem metallischen, ringförmigen Stützkörper, auf den der Dichtkörper aufgezogen ist, einem an dem Stützkörper vorgesehenen, außen umlaufenden Randbereich, der nicht von dem Dichtkörper überzogen ist, sowie einer am Außenumfang des Randbereichs ausgebildeten Zentrierfläche.

Aus der DE 198 41 123 B4 oder der US-A-2010/0244389 ist ein Radialwellendichtring mit den eingangs genannten Merkmalen bekannt. Bei diesem bekannten Radialwellendichtring, der sich in der Praxis bisher bereits bestens bewährt hat, liegen sowohl die Zentrierfläche des umlaufenden Randbereichs des Stützkörpers als auch der äußere Umfangsbereich des Dichtkörpers an der inneren Wandung der Gehäusewandöffnung, durch die die Welle hindurchgeführt ist, an.

Das Material des Dichtkörpers besteht vorzugsweise aus einem hoch verschleißfesten elastomeren Material. Dieses Material ist gegenüber einer Vielzahl von Stoffen extrem resistent. Pumpengehäuse, die in der Kraftfahrzeugtechnik für Kühlmittelpumpen verwendet werden, bestehen häufig aus Duroplasten. Bei höheren Betriebstemperaturen kann es dabei zu Ausgasungen von Ammoniak, Formaldehyd und dergleichen kommen, die mit elastomeren Materialien reagieren und zur Verhärtung des Materials führen können.

Der Erfindung liegt daher die Aufgabe zugrunde, eine Radialwellendichtung zu schaffen, die selbst bei extrem langen Betriebszeiten absolut zuverlässig ist und ihre Dichtwirkung beibehält.

Erfindungsgemäß wird diese Aufgabe dadurch gelöst, dass die Dichtung von einem dicht in die Gehäusewandöffnung einsetzbaren Adapterteil aus wellenförmig geschwungenem Metallblech umgeben ist, dass das Adapterteil eine mittige zylindrische Durchgangsöffnung aufweist, die an ihrem in Druckrichtung hinten liegenden Ende einen Absatz aufweist, dass die Zentrierfläche des Stützkörpers zu der zylindrische Durchgangsöffnung des Adapterteils ein Übermaß aufweist und mit einem Presssitz in diesen einsetzbar ist, dass zwischen dem Stützkörper und dem in der Durchgangsöffnung des Adapterteils vorgesehenen Absatz ein zweiter membranartiger Dichtkörper angeordnet ist und dass der zweite Dichtkörper fest zwischen dem Absatz und dem Stützkörper einpressbar ist.

Bei der erfindungsgemäßen Radialwellendichtung besteht kein direkter Kontakt zwischen dem Material der Dichtkörper und der Wandung des Gehäuses, sondern das Material der Dichtkörper steht nur mit dem aus Edelstahlblech gefertigten Adapterteil in Berührung, das als federnder Zwischenkörper zwischen der eigentlichen Dichtung und der Gehäusewandung ausgebildet ist. Insofern kann das Material der Dichtkörper nicht durch das Material der Gehäusewandung negativ beeinträchtigt werden.

Abgesehen von dieser positiven Wirkung ist der Dichtmechanismus absolut zuverlässig, denn durch die neue Konstruktionsanordnung ist sowohl eine Dichtwirkung in radialer Richtung als auch in axialer Richtung gegeben. Die radiale Dichtung wird in herkömmlicher Weise durch den Stützkörper in Kombination mit dem ersten Dichtkörper erreicht und die axiale Dichtwirkung wird dadurch erzielt, dass der zweite Dichtkörper mit Hilfe des Stützkörpers gegen den an dem Adapterteil vorgesehenen Absatz gepresst wird. Der zweite Dichtkörper besteht vorzugsweise aus Polytetrafluorethylen (PTFE), welches eine extrem hohe Verschleißfestigkeit aufweist und somit eine lange Standzeit der Dichtung garantiert.

Dieser neue Dichtungsmechanismus kann dadurch dauerhaft aufrechterhalten werden, dass zur axialen Sicherung des Stützteils punktuelle mechanische Einkerbungen von außen durch das Blech des Adapterteils eingedrückt werden. Dadurch ist gewährleistet, dass selbst bei starker Beanspruchung der Dichtung und eventuell auftretenden Vibrationen das Stützteil in seiner Position gehalten wird.

Die Einkerbungen können so angebracht werden, dass sie in Druckrichtung unmittelbar vor dem eingepressten äußeren Randbereich des Stützkörpers angeordnet sind, sodass dadurch eine absolut zuverlässige, formschlüssige Fixierung des Stützteils innerhalb des Adapterteils gewährleistet ist.

Die dichtend an der Welle anliegenden Dichtlippen beider Dichtkörper können entgegen der Druckrichtung schräg gestellt sein. Dadurch wird auch in dem Bereich zwischen der Dichtung und der Welle für eine optimale Abdichtung gesorgt.

Radial innerhalb des Stützkörpers ist vorzugsweise ein Freiraum vorgesehen, der bei Bedarf mit einer Fettfüllung versehen werden kann.

Eine besonders zweckmäßige Ausführungsform der erfindungsgemäßen Radialwellendichtung besteht darin, dass radial innerhalb der Dichtung eine sich mindestens über die gesamte Länge der Dichtung erstreckende Hülse angeordnet ist, die bei der späteren Montage mit einer Presspassung auf die abzudichtende Welle aufschiebbar ist.

Die Hülse kann an beiden Enden aufgebördelt sein, sodass sie unverlierbar mit der Dichtung verbunden ist. Die Montage der Hülse erfolgt dadurch, dass zunächst eine Seite aufgebördelt wird. Dann wird der Freiraum innerhalb des Stützkörpers mit einer Fettfüllung versehen, und anschließend wird die Hülse durch die Dichtung hindurchgeschoben. Danach wird die zweite Seite der Hülse aufgebördelt, und später wird die Hülse mit Presssitz auf die Welle aufgeschoben.

Das Adapterteil weist vorzugsweise einen zylindrischen Umfang auf, der dicht in die Gehäusewandöffnung einsetzbar ist.

Um den Sitz des Adapterteils optimal zu gestalten, kann das Adapterteil auf der Druckseite der Dichtung mit einem radial verlaufenden Flansch versehen sein, der dicht gegen den die Gehäusewandung umgebenden Wandbereich anlegbar ist.

Um die Dichtung absolut zuverlässig herzustellen, kann der äußere zylindrische Umfang des Adapterteils zumindest über einen Teil seiner axialen Länge rundum mit einem Dichtlack versehen sein.

Eine zusätzliche Dichtwirkung zwischen Dichtung und Welle bzw. Hülse wird dadurch erreicht, dass die Dichtlippe des auf der Druckseite angeordneten Dichtkörpers an seinem an der Welle bzw. der Hülse anliegenden Ende eine nach außen gerichtete Wölbung aufweist und dass innerhalb der durch die Wölbung gebildeten Außennut ein Federring angeordnet ist.

Bei einer alternativen Ausführungsform der erfindungsgemäßen Radialwellendichtung kann die an dem zweiten Dichtkörper vorgesehene Dichtlippe auf der Druckseite an ihrem an der Welle bzw. der Hülse anliegenden Ende eine Wölbung aufweisen, wobei innerhalb der durch die Wölbung gebildeten Aufnahmenut ebenso wie bei dem ersten Dichtkörper ein Federring angeordnet ist. Durch diese Ausbildung des zweiten Dichtbereichs kann die Dichtwirkung noch verbessert werden.

Ferner kann an der an dem zweiten Dichtungsring vorgesehenen Dichtlippe auf der vom Lager weg gerichteten Seite bzw. der Luftseite eine umlaufende, vorspringende Nase ausgebildet sein, die an der Welle bzw. der Hülse dichtend anliegt. Durch diese dichtende Nase ist gewährleistet, dass von außen kein Schmutz in den Pumpenbereich eindringen kann.

Die Erfindung ist in der Zeichnung beispielhaft dargestellt und im Nachfolgenden im Einzelnen anhand der Zeichnung beschrieben:
- Fig. 1:: einen Schnitt durch die erfindungsgemäße Radialwellendichtung, wie sie in eine für Kraftfahrzeuge vorgesehene Kühlmittelpumpe eingebaut ist,
- Fig. 2:: den in Fig. 1 gekennzeichneten Ausschnitt II in vergrößerter Darstellung und
- Fig. 3:: den gleichen Schnitt wie Fig. 1 einer zweiten Ausführungsform der erfindungsgemäßen Radialwellendichtung.

Die in der Zeichnung dargestellte Radialwellendichtung 1 dient zur Abdichtung einer Welle 2, die durch die Öffnung 3 der Gehäusewand 4 einer Kühlmittelpumpe hindurchgeführt ist.

Die in der Zeichnung dargestellte Radialwellendichtung 1 besteht aus einem die Welle 2 unmittelbar umgebenden Dichtungsbereich 5 sowie einem den Dichtungsbereich 5 umgebenden Adapterteil 6, das aus wellenförmig geschwungenem Metallblech 7 besteht.

Das nach Art eines Faltenbalges ausgebildete Adapterteil 6, welches aus dünnem Edelstahlblech gefertigt ist, weist eine mittige zylindrische Durchgangsöffnung 8 auf.

Bei dem in der Zeichnung dargestellten Ausführungsbeispiel liegt die Druckseite bzw. Wasserseite 9 rechts von der Dichtung, während sich die Luftseite 10 auf der linken Seite befindet. Die zylindrische Durchgangsöffnung 8 des Adapterteils 6 ist an ihrem in Druckrichtung hinten liegenden Ende bzw. in der Zeichnung auf der linken Seite mit einem zur Welle 2 hin gerichteten Absatz 11 versehen. Der Absatz 11 wird dabei durch einen umlaufenden angeformten Flansch gebildet.

In seinem radial außen liegenden Bereich weist das Adapterteil 6 einen zylindrischen Umfang 12 auf, der dicht in die Öffnung 3 der Gehäusewand 4 eingesetzt ist. Auf der Druckseite 9 ist das Adapterteil 6 mit einem radial verlaufenden Flansch 13 versehen, der dicht gegen den die Gehäusewandöffnung 3 umgebenden Wandbereich anliegt.

Der äußere zylindrische Umfang 12 des Adapterteils 6 ist über einen Teil seiner axialen Länge rundum mit einem Dichtlack versehen, der einen dichten Sitz des Adapterteils 6 in der Gehäusewandöffnung 3 gewährleistet.

Der eigentliche Dichtungsbereich 5, der sich in Richtung auf die Welle 2 erstreckt, besteht auf der Druckseite 9 aus einem membranartigen, ringförmigen Dichtkörper 15 aus elastomerem Material, einem ringförmigen, metallischen Stützkörper 16, auf den der Dichtkörper 15 vorzugsweise mit einer Vorspannung aufgezogen ist, sowie einem zweiten Dichtkörper 17 aus PTFE-Material, der zur Luftseite der Dichtung hin zwischen dem Stützkörper 16 und dem Absatz 11 des Adapterteils 6 angeordnet ist.

An dem Stützkörper 16 ist ein außen umlaufender Randbereich 18 vorgesehen, der nicht von dem ersten Dichtkörper 15 überzogen ist. Am Außenumfang des Randbereichs 18 des Stützkörpers 16 ist eine Zentrierfläche 19 ausgebildet, die zu der zylindrischen Durchgangsöffnung 8 des Adapterteils 6 ein Übermaß aufweist und mit einem Presssitz in diesen eingesetzt ist.

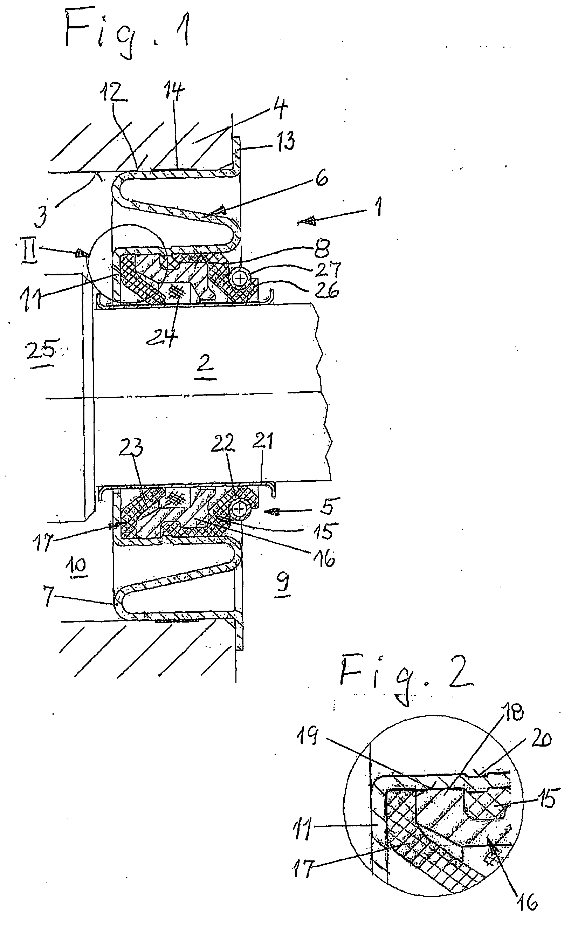

Der zwischen dem metallischen Stützkörper 16 und dem Absatz 11 des Adapterteils 6 angeordnete zweite Dichtkörper 17 ist mittels des Stützkörpers 16 fest gegen den Absatz 11 eingepresst. Dadurch entsteht in dem in Fig. 2 vergrößert dargestellten Bereich sowohl eine axiale als auch eine radiale Dichtung, die besonders zuverlässig ist.

Zur axialen Sicherung des Stützteils 16 in seiner eingepressten Position werden von außen mittels eines zangenartigen Werkzeugs Einkerbungen 20 in das Blech des Adapterteils 6 eingedrückt, und zwar an mehreren Stellen gleichmäßig über den Umfang verteilt. Die Einkerbungen 20, die durch das Blech in Form von inneren Vorsprüngen hindurchgreifen, werden in Druckrichtung unmittelbar vor dem Randbereich 18 des Stützkörpers 16 angebracht, sodass ein äußerst fester Sitz des Stützkörpers 16 in seiner Position innerhalb des Adapterteils 6 garantiert ist.

Zwischen dem Dichtungsbereich 5 und der Welle 2 ist eine Hülse 21 vorgesehen, die sich über die gesamte Länge der Dichtung 1 und noch ein Stück darüber hinaus erstreckt. Die Hülse 21 ist an beiden Enden aufgebördelt, sodass sie unverlierbar an der Dichtung 1 sitzt.

An beiden Dichtkörpern 15 und 17 sind Dichtlippen 22, 23 vorgesehen, die entgegen der Druckrichtung schräg gestellt sind und im fertig montierten Zustand an der Hülse 21 unter Vorspannung anliegen.

Radial innerhalb des Stützkörpers 16 ist ein Freiraum vorgesehen, der mit einer Fettfüllung 24 versehen werden kann.

Die Fettfüllung 24 wird vor dem Einsetzen der Hülse 21 eingebracht. Dann wird die Hülse 21, die bereits an einem Ende aufgebördelt ist, durch den innern Bereich der Dichtung 1 hindurchgesteckt und anschließend auch am anderen Ende aufgebördelt, sodass sie fest - eventuell aber geringfügig axial verschieblich - in der Dichtung 1 sitzt.

Die Hülse 21 ist aus einem Stahl mit hoher Oberflächenhärte hergestellt und wird beim Zusammenbau der Pumpe mit Presssitz auf die Welle 2 aufgeschoben. An die Hülse 21 schließt sich dann auf der Luftseite ein die Welle 2 tragendes, in der Zeichnung nicht näher dargestelltes Lager 25 an.

Die Dichtlippe 23 des auf der Druckseite angeordneten Dichtkörpers 15 weist an ihrem an der Hülse 21 anliegenden Ende eine Wölbung 26 mit einem nach außen gerichteten Endteil auf, wodurch eine umlaufende Außennut entsteht. In diese Außennut wird ein Federring 27 eingesetzt, wodurch die Dichtlippe 22 zusätzlich gezielt gegen die Hülse 21 gedrückt wird.

Während der erste, der Druckseite zugewandte Dichtkörper 15 aus elastomerem Material gefertigt ist, besteht der zweite Dichtkörper 17 aus dem stabileren Polytetrafluorethylen (PTFE), welches für den vorliegenden Anwendungsfall eine hohe Standzeit der Dichtung gewährleistet. Das PTFE kann gefüllt sein, und zwar beispielsweise mit Glasfasern oder Kohlenstoff.

Das Adapterteil 6 wird für den vorliegenden Anwendungsfall aus dünnwandigem Edelstahlblech hergestellt. Durch die faltenbalgartige Formgebung können radiale und axiale Schwingungen der Welle 2 bequem über das Pumpengehäuse aufgenommen werden.

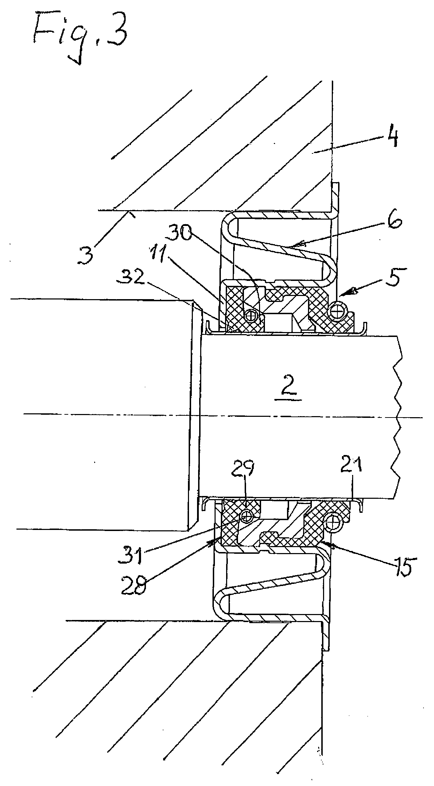

Fig. 3 zeigt den gleichen Schnitt wie Fig. 1, wobei für identische Teile die gleichen Bezugszeichen wie in Fig. 1 verwendet worden sind.

Auch bei diesem Ausführungsbeispiel dient die erfindungsgemäße Radialwellendichtung zur Abdichtung einer Welle 2, die durch die Öffnung 3 der Gehäusewand 4 einer Kühlmittelpumpe hindurchgeführt ist.

Der Dichtungsbereich 5 sitzt ebenso wie bei dem in Fig. 1 dargestellten Ausführungsbeispiel in einem Adapterteil 6, das aus wellenförmig geschwungenem Metallblech besteht.

Der Dichtungsbereich 5 wird in gleicher Weise wie bei dem in Fig. 1 dargestellten Ausführungsbeispiel im Wesentlichen durch zwei Dichtkörper gebildet, wobei der erste Dichtkörper 15 identisch ist mit dem Dichtkörper gemäß Fig. 1. Der zweite Dichtkörper 28, der anstelle des in Fig. 1 dargestellten Dichtkörpers 17 angeordnet ist, ist mit einer abgewandelten Dichtlippe 29 versehen. Die zur Druckseite gerichtete Dichtlippe 29 weist an ihrem an der Welle 2 bzw. der Hülse 21 anliegenden Ende eine Wölbung 30 auf, wobei innerhalb der durch die Wölbung 30 gebildete Aufnahmenut ein Federring 31 angeordnet ist. Der Federring hat die Aufgabe, die Dichtlippe niederzudrücken, um dadurch die Dichtwirkung noch weiter zu verbessern.

An der an dem zweiten Dichtkörper 28 vorgesehenen Dichtlippe 29 ist an der Luftseite eine umlaufende vorspringende Nase 32 vorgesehen, die an der Welle 2 bzw. der Hülse 21 anliegt. Diese umlaufende Nase 32 soll in erster Linie dazu dienen, eine zusätzliche Dichtung gegen den Außenbereich zu erzeugen, damit keine Schmutzpartikel von außen in das Pumpeninnere gelangen.

Die erfindungsgemäße Radialwellendichtung garantiert eine hohe Standzeit, die insbesondere für den Automotive-Bereich, wenn die Dichtung beispielsweise in Kühlwasserpumpen eingebaut ist, eine bedeutende Rolle spielt.

### Bezugszeichenliste

- 1: Radialwellendichtung
- 2: Welle
- 3: Gehäusewandöffnung
- 4: Gehäusewand
- 5: Dichtungsbereich
- 6: Adapterteil
- 7: Metallblech
- 8: Durchgangsöffnung
- 9: Druck- bzw. Wasserseite
- 10: Luftseite
- 11: Absatz
- 12: zylindrischer Umfang
- 13: Flansch
- 14: Dichtlack
- 15: erster Dichtkörper
- 16: Stützkörper
- 17: zweiter Dichtkörper
- 18: Randbereich des Stützkörpers 16
- 19: Zentrierfläche
- 20: Einkerbungen
- 21: Hülse
- 22: Dichtlippe
- 23: Dichtlippe
- 24: Fettfüllung
- 25: Lager
- 26: Wölbung der Dichtlippe 23
- 27: Federring
- 28: zweiter Dichtkörper
- 29: Dichtlippe
- 30: Wölbung der Dichtlippe 29
- 31: Federring
- 32: vorspringende Nase

## Patentansprüche

1. Radialwellendichtung zur Abdichtung einer Welle (2), die durch eine Gehäusewandöffnung (3) hindurchgeführt ist, bestehend aus mindestens einem membranartigen, ringförmigen ersten Dichtkörper (15) mit einer dichtend an die Welle (2) anlegbaren Dichtlippe (22), einem metallischen, ringförmigen Stützkörper (16), auf den der Dichtkörper (15) aufgezogen ist, einem an dem Stützkörper (16) vorgesehenen, außen umlaufenden Randbereich (18), der nicht von dem Dichtkörper (15) überzogen ist, sowie einer am Außenumfang des Randbereichs (18) ausgebildeten Zentrierfläche (19), wobei die Dichtung von einem dicht in die Gehäusewandöffnung (3) einsetzbaren Adapterteil (6) aus wellenförmig geschwungenem Metallblech umgeben ist, **dadurch gekennzeichnet, dass** das Adapterteil (6) eine mittige zylindrische Durchgangsöffnung (8) aufweist, die an ihrem in Druckrichtung hinten liegenden Ende mit einem Absatz (11) versehen ist, dass die Zentrierfläche (19) des Stützkörpers (16) zu der zylindrische Durchgangsöffnung (8) des Adapterteils (6) ein Übermaß aufweist und mit einem Presssitz in diese einpressbar ist, dass zwischen dem Stützkörper (16) und dem in der Durchgangsöffnung (8) des Adapterteils (6) vorgesehenen Absatz (11) ein zweiter membranartiger Dichtkörper (17) angeordnet ist und dass der zweite Dichtkörper (17) fest zwischen dem Absatz (11) und dem Stützkörper (16) einpressbar ist.

2. Radialwellendichtung nach Anspruch 1, **dadurch gekennzeichnet, dass** zur axialen Sicherung des Stützkörpers (16) punktuelle mechanische Einkerbungen (20) von außen durch das Blech des Adapterteils (6) eindrückbar sind.

3. Radialwellendichtung nach Anspruch 2, **dadurch gekennzeichnet, dass** die Einkerbungen (20) in Druckrichtung unmittelbar vor dem eingepressten äußeren Randbereich (18) des Stützkörpers (16) angeordnet sind.

4. Radialwellendichtung nach einem der Ansprüche 1 bis 3,
**dadurch gekennzeichnet, dass** die dichtend an der Welle anliegenden Dichtlippen (22, 23) beider Dichtkörper (15, 17) entgegen der Druckrichtung schräg gestellt sind.

5. Radialwellendichtung nach einem der Ansprüche 1 bis 4,
**dadurch gekennzeichnet, dass** radial innerhalb des Stützkörpers (16) ein Freiraum vorgesehen ist.

6. Radialwellendichtung nach Anspruch 5, **dadurch gekennzeichnet, dass** der Freiraum innerhalb des Stützkörpers (16) mit einer Fettfüllung (24) versehen ist.

7. Radialwellendichtung nach einem der Ansprüche 1 bis 6,
**dadurch gekennzeichnet, dass** radial innerhalb der Dichtung (1) eine sich mindestens über die gesamte Länge der Dichtung (1) erstreckende Hülse (21) angeordnet ist, die mit einer Presspassung auf die abzudichtende Welle (2) aufschiebbar ist.

8. Radialwellendichtung nach Anspruch 7, **dadurch gekennzeichnet, dass** die Hülse (21) an ihren beiden Enden aufgebördelt ist.

9. Radialwellendichtung nach einem der Ansprüche 1 bis 8,
**dadurch gekennzeichnet, dass** das Adapterteil (6) einen äußeren zylindrischen Umfang (12) aufweist, der dicht in die Gehäusewandöffnung (3) einsetzbar ist.

10. Radialwellendichtung nach einem der Ansprüche 1 bis 9,
**dadurch gekennzeichnet, dass** das Adapterteil (6) auf der Druckseite (9) der Dichtung (1) mit einem radial verlaufenden Flansch (13) versehen ist, der dicht gegen den die Gehäusewandöffnung (3) umgebenden Wandbereich anlegbar ist.

11. Radialwellendichtung nach Anspruch 9 oder 10,
**dadurch gekennzeichnet, dass** der äußere zylindrische Umfang (12) des Adapterteils (6) zumindest über einen Teil seiner axialen Länge rundum mit einem Dichtlack (14) versehen ist.

12. Radialwellendichtung nach einem der Ansprüche 1 bis 11,
**dadurch gekennzeichnet, dass** die Dichtlippe (22) des auf der Druckseite (9) angeordneten Dichtkörpers (15) an ihrem der Welle (2) bzw. der Hülse (21) anliegenden Ende eine nach außen gerichtete Wölbung (26) aufweist und dass innerhalb der durch die Wölbung (26) gebildeten Außennut ein Federring (27) angeordnet ist.

13. Radialwellendichtung nach einem der Ansprüche 1 bis 12,
**dadurch gekennzeichnet, dass** die an dem zweiten Dichtkörper (28) vorgesehene Dichtlippe (29) auf der Druckseite an ihrem an der Welle (2) bzw. der Hülse (21) anliegenden Ende eine Wölbung (30) aufweist, und dass innerhalb der durch die Wölbung (30) gebildeten Aufnahmenut ein Federring (31) angeordnet ist.

14. Radialwellendichtung nach einem der Ansprüche 1 bis 13,
**dadurch gekennzeichnet, dass** an der an dem zweiten Dichtkörper (28) vorgesehenen Dichtlippe (29) an der Luftseite eine umlaufende, vorspringende Nase (32) vorgesehen ist, die an der Welle (2) bzw. der Hülse (21) anliegt.

## Claims

1. Radial shaft seal for sealing a shaft (2) passing through a housing wall opening (3), comprising at least one membrane-like, annular first sealing element (15) with a sealing lip (22) that can be positioned against the shaft (2) in sealing fashion, a metallic, annular supporting element (16) on which the sealing element (15) is mounted, an edge area (18) provided on the supporting element (16), which runs around the outer circumference and is not covered by the sealing element (15), and a centring surface (19) provided on the outer circumference of the edge area (18), whereby the seal is surrounded by an adapter part (6) made of undulating sheet metal that can be inserted tightly into the housing wall opening (3), **characterised in that** the adapter part (6) displays a central, cylindrical opening (8) provided with a shoulder (11) on its rear end, seen in the pressure direction, **in that** the centring surface (19) of the supporting element (16) has an interference relative to the cylindrical opening (8) of the adapter part (6) and can be inserted into it in an interference fit, **in that** a second, membrane-like sealing element (17) is located between the supporting element (16) and the shoulder (11) provided in the opening (8) of the adapter part (6), and **in that** the second sealing element (17) can be firmly pressed in between the shoulder (11) and the supporting element (16).

2. Radial shaft seal according to Claim 1, **characterised in that** individual mechanical notches (20) can be impressed through the sheet metal of the adapter part (6) from the outside for securing the supporting element (16) in the axial direction.

3. Radial shaft seal according to Claim 2, **characterised in that**, seen in the pressure direction, the notches (20) are located immediately upstream of the press-fitted outer edge area (18) of the supporting element (16).

4. Radial shaft seal according to one of Claims 1 to 3, **characterised in that** the sealing lips (22, 23) of the two sealing elements (15, 17), which are positioned against the shaft in sealing fashion, are inclined in the direction opposite to the pressure direction.

5. Radial shaft seal according to one of Claims 1 to 4, **characterised in that** a space is provided radially inside the supporting element (16).

6. Radial shaft seal according to Claim 5, **characterised in that** the space inside the supporting element (16) is provided with a grease filling (24).

7. Radial shaft seal according to one of Claims 1 to 6, **characterised in that** a sleeve (21), which extends at least over the entire length of the seal (1), is provided radially inside the seal (1) and can be slid onto the shaft (2) to be sealed with an interference fit.

8. Radial shaft seal according to Claim 7, **characterised in that** the sleeve (21) is flanged at both its ends.

9. Radial shaft seal according to one of Claims 1 to 8, **characterised in that** the adapter part (6) has an outer cylindrical circumference (12) that can be inserted tightly into the housing wall opening (3).

10. Radial shaft seal according to one of Claims 1 to 9, **characterised in that** the adapter part (6) is provided with a radial flange (13) on the pressure side (9) of the seal (1), which can be positioned tightly against the wall area surrounding the housing wall opening (3).

11. Radial shaft seal according to Claim 9 or 10, **characterised in that** the outer cylindrical circumference (12) of the adapter part (6) is provided with an all-round sealing coating (14), at least over part of its axial length.

12. Radial shaft seal according to one of Claims 1 to 11, **characterised in that** the sealing lip (22) of the sealing element (15) located on the pressure side (9) has an outward-facing curvature (26) on its end positioned against the shaft (2) or the sleeve (21), and **in that** a split washer (27) is located inside the outer groove formed by the curvature (26).

13. Radial shaft seal according to one of Claims 1 to 12, **characterised in that** the pressure side of the sealing lip (29) provided on the second sealing element (28) displays a curvature (30) on its end positioned against the shaft (2) or the sleeve (21), and **in that** a split washer (31) is located inside the receiving groove formed by the curvature (30).

14. Radial shaft seal according to one of Claims 1 to 13, **characterised in that,** on the sealing lip (29) provided on the second sealing element (28), an all-round projecting nose (32) that lies on the shaft (2) or the sleeve (21) is provided on the air side.

## Revendications

1. Joint radial d'arbre pour l'étanchement d'un arbre (2) qui est passé par une ouverture (3) de la paroi du boîtier, le joint consistant en au moins un premier corps (15) de forme annulaire et du type de membrane muni d'une lèvre d'étanchéité (22) configurée pour s'appliquer contre l'arbre (2), en un corps de support (16) métallique de forme annulaire sur lequel est monté le corps je joint, en une zone de bord périphérique extérieure (18) qui n'est pas recouverte du corps d'étanchéité (15), et en une surface de centrage (19) formée sur la périphérie extérieure de la zone de bord (18), ledit joint étant entouré d'un adapteur (6) en une tôle métallique courbée en forme d'ondes et insérable de manière étanche dans l'ouverture (3) de la paroi du boîtier, **caractérisé en ce que** l' adapteur (6) comporte une ouverture de passage cylindrique centrale (8) qui est munie d'un épaulement (11) à son extrémité située à l'arrière dans le sens de pression, que la surface de centrage (19) du corps de support (16) présente une surmesure relativement à l'ouverture de passage cylindrique (8) de l'adapteur (6) est peut être pressée dans celle-ci par ajustement serré, qu'entre le corps de support (16) et l'épaulement (11) prévu dans l'ouverture de passage (8) de l'adapteur (6) est arrangé un deuxième corps d'étanchéité du type membrane (17) et que le deuxième corps d'étanchéité (17) peut être pressé de manière fixe entre l'épaulement (11) et le corps de support (16).

2. Joint radial d'arbre selon la revendication 1, **caractérisé en ce que** pour la fixation axiale du corps de support (16), des encoches (20) mécaniques ponctuels peuvent être enfoncés de l'extérieur via la tôle de l'adapteur (6).

3. Joint radial d'arbre selon la revendication 2, **caractérisé en ce que** les encoches (20) sont disposés directement devant de la zone de bord extérieure (18) enfoncée du corps de support (16) dans le sens pression.

4. Joint radial d'arbre selon l'une des revendications 1 à 3, **caractérisé en ce que** les lèvres d'étanchéité (22, 23) des deux corps d'étanchéité (15, 17) s'épousant de manière étanche contre l'arbre sont inclinées dans le sens opposé à la direction de pression.

5. Joint radial d'arbre selon l'une des revendications 1 à 4, **caractérisé en ce que** radialement à l'intérieur du corps de support (16) est prévu un espace libre.

6. Joint radial d'arbre selon la revendication 5, **caractérisé en ce que** ledit espace libre à l'intérieur du corps de support (16) et muni d'un bourrage de graisse.

7. Joint radial d'arbre selon l'une des revendications 1 à 6, **caractérisé en ce que** radialement à l'intérieur du joint (1) peut être monté un manche (21) qui s'étend au moins sur la longueur totale du joint (1) et qui peut être monté par un ajustement serré sur l'arbre (2) à rendre étanche.

8. Joint radial d'arbre selon la revendication 7, **caractérisé en ce que** le manche (21) présente un sertissage sur ses deux extrémités.

9. Joint radial d'arbre selon l'une des revendications 1 à 8, **caractérisé en ce que** l' adapteur (6) présente un périmètre extérieur cylindrique (12) qui peut être installé de manière étanche dans l'ouverture (3) de la paroi du boîtier.

10. Joint radial d'arbre selon l'une des revendications 1 à 9, **caractérisé en ce que**, sur le côté pression du joint (1), l'adapteur (6) est muni d'une bride (13) qui s'étend radialement et qui peut s'appliquer contre la partie de la paroi entourant l'ouverture (3) de la paroi du boîtier.

11. Joint radial d'arbre selon l'une des revendications 9 ou 10, **caractérisé en ce que** le périmètre cylindrique extérieur de l'adapteur (16) est muni tout autour d'un vernis d'étanchéité (14), au moins sur une partie de sa longueur axial.

12. Joint radial d'arbre selon l'une des revendications 1 à 11, **caractérisé en ce que** la lèvre d'étanchéité (22) du corps d'étanchéité (15) disposé sur le côté pression (9) présente sur son extrémité s'appliquant contre l'arbre (2) ou contre le manche (21) une courbure (26) vers l'extérieur et qu'un anneau-ressort (27) est disposé à l'intérieur de la rainure extérieure formée par ladite courbure (26).

13. Joint radial d'arbre selon l'une des revendications 1 à 12, **caractérisé en ce que** la lèvre d'étanchéité (29) prévue sur le deuxième corps de joint (28) présente, sur le côté pression, sur son extrémité s'appliquant contre l'arbre (2) ou contre le manche (21) une courbure (30) et qu'un anneau-ressort (31) est disposé à l'intérieur de la rainure de réception formée par ladite courbure (30)

14. Joint radial d'arbre selon l'une des revendications 1 à 13, **caractérisé en ce que** sur la lèvre d'étanchéité (29) prévue sur le deuxième corps de joint (28), sur le côté piste, est prévu un ergot circonférentiel en saillie (32) qui s'appliqué contre l'arbre (2) ou le manche (21).
